# DEMANDE DE BREVET EUROPEEN

(11) **EP 0 807 925 A1**
(43) Date de publication de la demande: **19.11.1997**
(21) Numéro de dépôt: 97400867.4
(22) Date de dépôt: 21.04.1997
(51) Int. Cl.: G11B 5/33, G11B 5/37

(54) **Tête magnétique à détecteur de champ à semiconducteur placé sous l'entrefer**

(30) Priorité: 15.05.1996 FR 9606083
(71) Demandeur: SILMAG, 38524 Saint-Egrève Cedex (FR)
(72) Inventeur: Lazzari, Jean-Pierre, 38700 Corenc (FR)
(74) Mandataire: Signore, Robert

(57) **Abrégé**

Le détecteur (40) est du type à semiconducteur. Il est placé sous l'entrefer (24) de la tête. Il est allongé et travaille en courant. Le courant de polarisation (Iₒ) s'inverse d'une partie à l'autre.

Application à l'enregistrement magnétique.

## Description

### Domaine technique

La présente invention a pour objet une tête magnétique à détecteur de champ à semiconducteur placé sous l'entrefer. L'invention trouve une application dans l'enregistrement d'informations sur disque, bande, etc...

### Etat de la technique

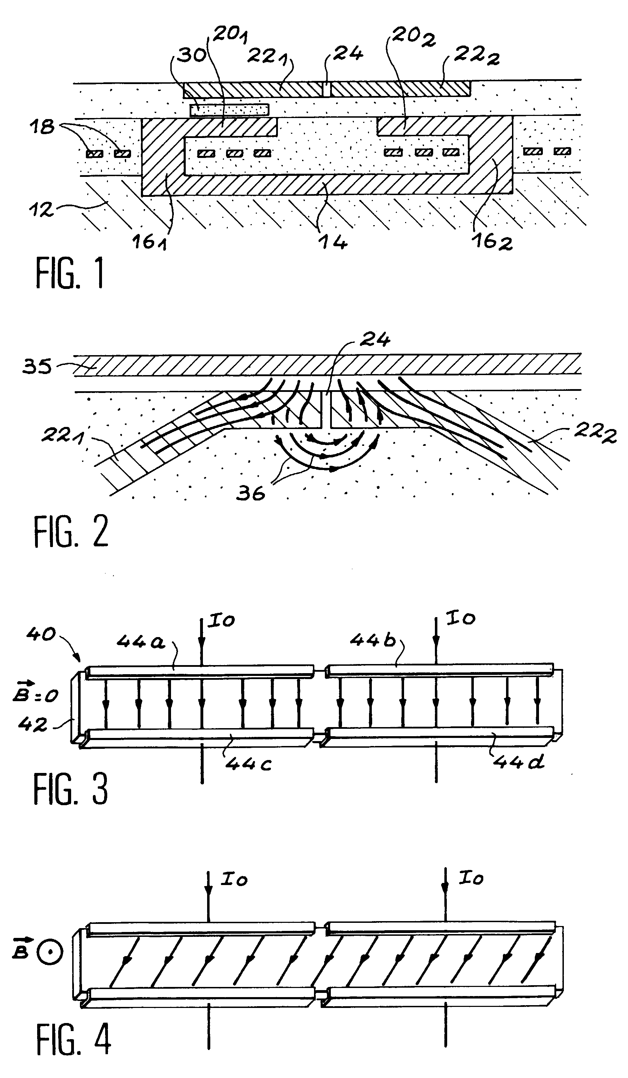

Une tête magnétique à détecteur de champ comprend en général, comme représenté sur la figure 1 annexée, un substrat semiconducteur 12, une pièce magnétique inférieure 14, deux piliers magnétiques 16₁, 16₂, un enroulement conducteur 18, deux concentrateurs de flux 20₁, 20₂ et deux pièces polaires 22₁, 22₂ séparées par un entrefer 24. Le détecteur permettant de mesurer le champ de lecture peut être placé dans un entrefer divisant la pièce magnétique inférieure 14, comme décrit dans le brevet français FR-A-2 700 633 ou dans des intervalles pratiqués dans les piliers. Mais on peut préférer le placer entre l'un des concentrateurs 20₁, 20₂ et l'une des pièces polaires 22₁, 22₂, comme représenté sur la figure où il porte la référence 30. Etant placé plus près de l'entrefer 24, le détecteur reçoit davantage de flux magnétique et est donc plus efficace.

On pourrait penser rapprocher encore le détecteur de l'entrefer en le plaçant directement sous celui-ci, selon une disposition utilisée généralement pour les magnétorésistances. Mais dans le cas d'un détecteur à semiconducteur, la détection s'effectue sur la composante du champ perpendiculaire au plan du détecteur, alors qu'une magnétorésistance est sensible au champ situé dans le plan de l'élément magnétorésistant. Or, sous un entrefer, la composante verticale du champ n'a pas le même sens de part et d'autre du plan médian de l'entrefer, de sorte qu'en moyenne cette composante est nulle. Un détecteur de champ à semiconducteur placé sous l'entrefer ne fonctionnerait donc pas. Ce n'est évidemment pas le cas pour la composante horizontale, de sorte que cette disposition ne convient, a priori, que pour les magnétorésistances.

La présente invention a justement pour but de résoudre ce problème et vise à tout de même le détecteur à semiconducteur sous l'entrefer pour bénéficier d'une meilleure efficacité.

### Exposé de l'invention

A cette fin, l'invention propose d'abord d'utiliser un détecteur à semiconducteur d'un type particulier. On sait qu'un détecteur à semiconducteur, par exemple à effet HALL, est constitué de couches semiconductrices appropriées parcourues par un courant dit de polarisation. Pour un détecteur fonctionnant en tension, le dispositif présente une forme carrée. Le courant est injecté entre deux côtés opposés du carré et la tension est prélevée entre les deux autres côtés opposés du carré. Cette tension est proportionnelle au produit du courant de polarisation par la composante du champ magnétique perpendiculaire au plan des couches.

Si l'on plaçait un tel détecteur sous l'entrefer, le signal de lecture serait nul, pour les raisons indiquées plus haut. L'invention préconise alors d'utiliser un autre type de détecteur, fonctionnant en courant et non plus en tension, et qui présente une forme allongée avec deux parties symétriques. Si ces deux parties sont placées sous les deux pièces polaires, symétriquement par rapport au plan médian de l'entrefer, et si le détecteur fonctionne comme à l'accoutumée, le courant délivré reste nul. Mais si l'on renverse le courant de polarisation dans l'une des deux parties, le signal de mesure n'est plus nul et prend une valeur proportionnelle à la valeur absolue de la composante verticale du champ magnétique.

De façon plus précise, la présente invention a donc pour objet une tête magnétique comprenant un circuit magnétique avec deux pièces polaires séparées par un entrefer et un détecteur de champ magnétique à semiconducteur, caractérisée par le fait que ce détecteur est placé sous l'entrefer et comprend deux parties symétriques allongées disposées sous les pièces polaires et parcourues par des courants de polarisation égaux mais opposés en direction.

Bien qu'en principe les deux parties du détecteur puissent être alimentées séparément par deux sources de polarisation, il semble plus simple de les alimenter en série par une même source. Il suffit alors de relier l'une des parties à l'autre.

Dans une variante avantageuse, le détecteur comprend en outre une couche mince magnétique destinée à canaliser le champ magnétique.

Bien que tout détecteur à semiconducteur puisse convenir, les détecteurs à effet HALL semblent être les plus avantageux.

### Brève description des dessins

- la figure 1, déjà décrite, montre en coupe une tête magnétique à détecteur à semiconducteur ;
- la figure 2 montre la distribution des lignes de champ au voisinage de l'entrefer ;
- la figure 3 illustre le fonctionnement d'un détecteur de champ à semiconducteur en l'absence de champ ;
- la figure 4 montre l'inclinaison des lignes de courant en présence de champ ;
- la figure 5 illustre le sens du courant latéral dit "de HALL" ;
- la figure 6 montre comment mesurer le courant de HALL ;
- la figure 7 montre la répartition des lignes de courant dans un détecteur ordinaire qui serait placé sous un entrefer ;
- la figure 8 illustre le fonctionnement du détecteur dans le cas de l'invention ;
- la figure 9 illustre le montage du circuit d'alimentation et de lecture ;
- la figure 10 montre la répartition des lignes de champ dans un détecteur équipé d'une couche mince magnétique ;
- la figure 11 montre, en coupe, une tête magnétique selon l'invention.

### Description de modes de réalisation

On voit, sur la figure 2, la partie de la tête magnétique située autour de l'entrefer. On retrouve les deux pièces polaires 22₁, 22₂ séparées par l'entrefer 24, le tout se déplaçant devant un support d'enregistrement 35, un disque par exemple. Les lignes de champ magnétique sous l'entrefer sont représentées schématiquement par les lignes fléchées 36. Ces lignes sont supposées partir de la pièce polaire 22₁ et aboutir sur la pièce polaire 22₂. Le champ est donc sensiblement dirigé vers le bas sous la première pièce polaire et vers le haut sous la seconde. En revanche, le champ est horizontal dans le plan de symétrie de l'entrefer.

La figure 3 montre un détecteur à effet HALL allongé utilisé conformément à l'invention. Un tel détecteur comprend des couches semiconductrices 42 appropriées gravées sous forme de rectangle et une double paire de contacts électriques d'entrée et de sortie de courant, à savoir les contacts 44a et 44b pour l'entrée et 44c et 44d pour la sortie.

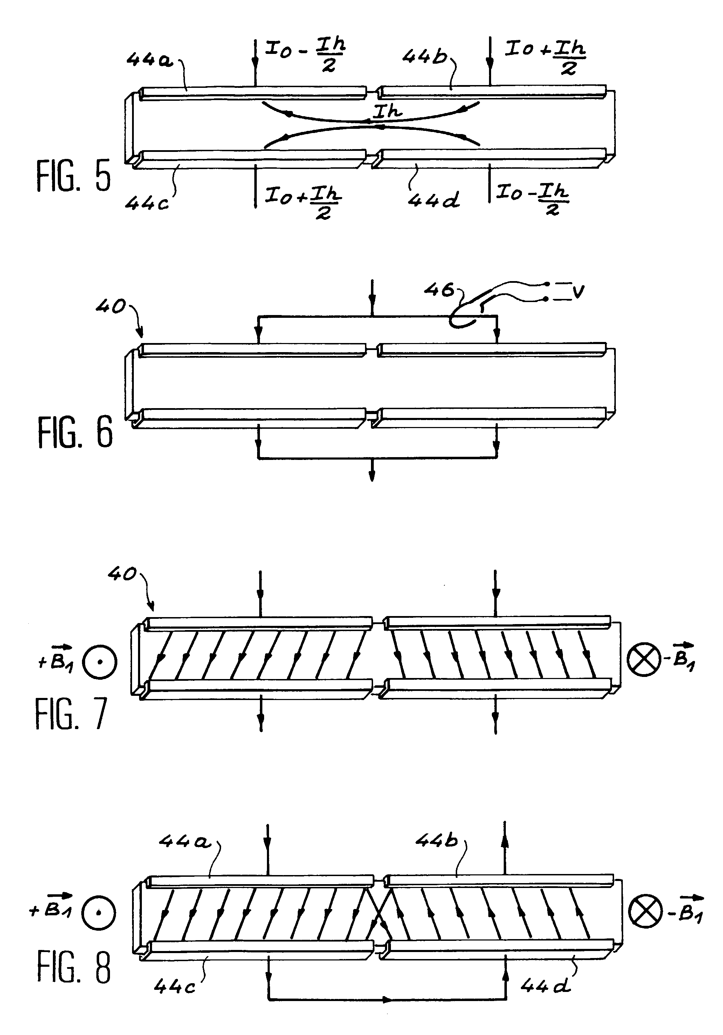

En l'absence de champ, les lignes de courant sont perpendiculaires aux contacts (fig. 3). En présence de champ perpendiculaire au plan du détecteur (donc perpendiculaire au plan de la figure) les lignes de courant sont obliques comme représenté sur la figure 4. Il existe donc un flux de charges dirigé de la droite vers la gauche (si le champ est orienté vers l'observateur). Ce flux est illustré sur la figure 5. Au centre du détecteur, l'intensité de ce courant, dit courant de HALL, est notée Ih. Ce courant se divise en deux parties, d'intensité égale à Ih/2, qui sortent du détecteur en empruntant les deux connexions 44a et 44c. Le courant entrant par 44a passe donc à Io-Ih/2 et le courant sortant par 44c à Io+Ih/2. Pour les entrées-sorties 44b, 44c de l'extrémité droite, la situation est inversée.

Pour mesurer le courant Ih, on peut utiliser le dispositif de la figure 6. Une boucle de courant 46, placée sur l'une quelconque des quatre connexions d'entrée ou de sortie, délivre une tension V sensible non pas au courant de polarisation, qui est continu, mais à sa variation Ih/2. La tension V aux bornes de la boucle constitue donc le signal de mesure.

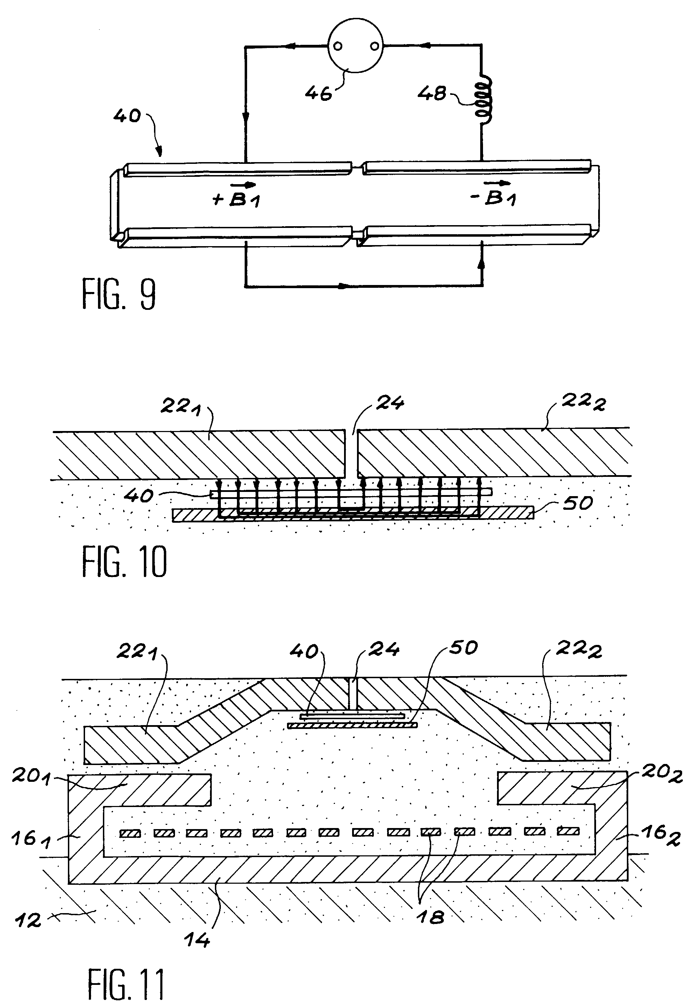

Si un tel détecteur était placé sous un entrefer tel que celui de la figure 2, les lignes de courant deviendraient celles de la figure 7. Elles seraient inclinées symétriquement par rapport au plan de symétrie, car le champ change de sens de part et d'autre de ce plan (il est supposé dirigé de l'arrière vers l'avant dans la partie gauche et de l'avant vers l'arrière dans la partie droite). Il n'y aurait plus de courant de la droite vers la gauche, comme pour la figure 5, et la tension détectée par l'enroulement 46 de la figure 6 serait nulle.

Selon l'invention, on inverse le courant de polarisation dans l'une des deux parties du détecteur, par exemple dans la partie droite selon la représentation de la figure 8. Dans cette partie, les lignes de courant s'inclinent alors vers la gauche, comme les lignes de courant de la partie gauche. On obtient à nouveau une composante globale non nulle du courant de HALL. Le plus simple, pour renverser le courant dans la partie droite, est de connecter en série les deux parties, ce qui est obtenu aisément en reliant le contact 44c au contact 44d.

Le courant de HALL peut être détecté encore par une spire comme sur la figure 6 ou par une inductance. Un montage possible est illustré sur la figure 9, où l'on voit un générateur de courant 46 alimentant les deux moitiés du détecteur en parallèle et un enroulement 48 disposé n'importe où dans le circuit. Comme le courant de polarisation est continu et le flux magnétique à mesurer est à haute fréquence, l'inductance de blocage 48 donnera à ses bornes une tension V proportionnelle au courant haute fréquence.

On observera, accessoirement, que le détecteur de l'invention ne possède plus que deux sorties au lieu des quatre classiques, ce qui simplifie notablement son montage et sa connexion.

La figure 10 montre une variante dans laquelle une fine couche magnétique 50, par exemple en fer-nickel, d'épaisseur comprise entre 30 et 200 nanomètres, est placée sous le détecteur 40. Cette couche canalise la composante horizontale du champ et augmente le flux traversant le détecteur 40. Cette couche est suffisamment fine pour être saturée à l'écriture.

La figure 11 représente finalement une tête magnétique complète équipée selon l'invention par un détecteur de champ à semiconducteur placé sous l'entrefer. Les références numériques sont les mêmes que sur la figure 1. Dans la variante illustrée et pour augmenter le signal de lecture, le circuit magnétique est à forte réluctance grâce à une séparation entre les concentrateurs 20₁, 20₂, et les pièces polaires 22₁, 22₂. On voit encore le détecteur 40 placé sous l'entrefer 24 et la couche mince magnétique 50 à proximité.

L'invention qui vient d'être décrite peut utiliser n'importe quel capteur à semiconducteur. Ces dispositifs sont connus. On pourra en trouver une description, suivant leur mode de réalisation, dans les articles suivants :
- H.P. BALTES et R.S. POPOVIC
   "Integrated Semiconductor Magnetic-Field Sensor", Proc. IEEE, 74 (1986) 1107-1132.
- S. KORDIC
   "Integrated Silicon Magnetic-Field Sensors, Sensors and Actuators", Proc. IEEE, 10 (1986) 347-378.
- J.E. LENZ
   "A Review of Magnetic Sensors", Proc. IEEE, 78 (1990) 973-989.
- S. TAKAMIYA et K. FUJIKAWA
   "Differential Amplification Magnetic Sensor", IEEE Trans. Electr. Dev. ED-19 (1972) 1085-1090.
- R.S. POPOVIC
   "The Vertical HALL-Effect Device", IEEE Electr. Dev. Lett. EDL-5 (1984) 357-358.

## Revendications

1. Tête magnétique comprenant un circuit magnétique avec deux pièces polaires (22₁, 22₂) séparées par un entrefer (24) et un détecteur de champ magnétique à semiconducteur, caractérisée par le fait que ce détecteur (40) est placé sous l'entrefer (24) et comprend deux parties symétriques allongées disposées sous les pièces polaires (22₁, 22₂) et parcourues par des courants de polarisation égaux mais opposés en direction.

2. Tête magnétique selon la revendication 1, caractérisée par le fait que les deux parties du détecteur sont reliées électriquement en série dans un circuit d'alimentation (46) en courant.

3. Tête magnétique selon la revendication 1, caractérisée par le fait qu'elle comprend en outre une couche mince magnétique (50) disposée sous le détecteur (40).

4. Tête magnétique selon la revendication 2, caractérisée par le fait que le circuit d'alimentation comprend une inductance (48).

5. Tête magnétique selon la revendication 1, caractérisée par le fait que le détecteur (40) est un détecteur à effet HALL.
